# EUROPEAN PATENT APPLICATION

(11) **EP 4 836 141 A1**
(43) Date of publication of application: **04.11.2026**
(21) Application number: 24913094.9
(22) Date of filing: 27.12.2024
(51) Int. Cl.: H01M 50/262, H01M 50/249, H01M 50/264

(54) **RESTRAINT, BATTERY SYSTEM, AND AIRCRAFT**

(30) Priority: 28.12.2023 JP 2023223660
(71) Applicant: Softbank Corp., Tokyo 105-7529 (JP)
(72) Inventor: SAITO, Takaya, Tokyo 105-7529 (JP); TAKAYANAGI, Yoshiki, Tokyo 105-7529 (JP); FUKUCHI, Svetlana, Tokyo 105-7529 (JP); ENOMOTO, Miki, Tokyo 112-0003 (JP); YAMAMOTO, Ryoichi, Tokyo 112-0003 (JP)
(74) Representative: Dilg, Haeusler, Schindelmann Patentanwaltsgesellschaft mbH
(86) International application number: PCT/JP2024/046364
(87) International publication number: WO 2025/143208

(57) **Abstract**

A restraint for restraining a lithium metal battery including a plurality of battery cells, the restraint including a restraint member having a frame member, and a plurality of units made of a rubber-based material and arranged inside the frame member, each of the plurality of units including at least one protrusion portion, and at least one unit of the plurality of units being arranged in an orientation different from that of another unit, and a fixing member which fixes the plurality of units in a state where the plurality of units are pressed against the lithium metal battery and pressurized, is provided. Each of the plurality of units has a planar base portion and the at least one protrusion portion protruding from the base portion in a thickness direction of the base portion, and a length of the protrusion portion along a first direction parallel to the plane of the base portion is different from a length of the protrusion portion along a second direction parallel to the plane and different from the first direction.

## Description

### TECHNICAL FIELD

The present invention relates to a restraint, a battery system, and an aircraft.

### BACKGROUND ART

Patent Document 1 describes that, in a lithium-ion battery, a plurality of stacked battery cells are clamped by metal plates, and the metal plates are restrained using metal bands, thereby applying a restraining pressure in a stacking direction to the battery cells.

### RELATED ART DOCUMENTS

### PATENT DOCUMENTS

Patent Document 1: Japanese Patent Application Publication No. 2022-075152

### GENERAL DISCLOSURE

### SOLUTION TO PROBLEM

According to an embodiment of the present invention, a restraint is provided. The restraint may restrain a lithium metal battery including a plurality of battery cells. The restraint may include a frame member. The restraint may include a restraint member having: a plurality of units made of a rubber-based material and arranged inside the frame member, each of the plurality of units including at least one protrusion portion, and at least one unit of the plurality of units being arranged in an orientation different from that of another unit. The restraint may include a fixing member which fixes the plurality of units in a state where the plurality of units are pressed against the lithium metal battery and pressurized. The restraint may restrain lithium the metal battery along the direction in which the plurality of battery cells are arranged.

In the restraint, each of the plurality of units may include a planar base portion. Each of the plurality of units may have the at least one protrusion portion protruding from the base portion in a thickness direction of the base portion. A length of the protrusion portion along a first direction parallel to the plane of the base portion may be different from a length of the protrusion portion along a second direction parallel to the plane and different from the first direction. The base portion may be square. Each of the plurality of units may have a plurality of the protrusion portions arranged in a same orientation in a plurality of rows and a plurality of columns on the square base portion. The base portion may be a hexagon. In any of the restraints, the plurality of units may be arranged side by side so as to be in contact with each other. In any of the restraints, the plurality of units may be arranged with spacing therebetween.

In any of the restraints, the protrusion portion may have a hollow portion opening toward a side of the base portion. The protrusion portion may have a curved shape on a top surface on a side opposite the side of the base portion. In any of the restraints, the frame member may have a recess. In any of the restraints, the shape of the recess may be a shape corresponding to the shape of the base portion. In any of the restraints, in a case where the plurality of units are arranged without spacing therebetween and without gaps, the shape of the recess may be a shape corresponding to an outer edge of an entire shape formed by the plurality of units assembled together. In any of the restraints, the restraint member may have an attachment fixed inside the recess. In any of the restraints, the outer side wall of the attachment may have a shape corresponding a side wall of the recess, and the inner side wall of the attachment may be a shape corresponding an outer edge of an entire shape formed by the plurality of units assembled together. In any of the restraints, the at least one protrusion portion may have a hole portion on a top surface pressed against the lithium metal battery.

According to an embodiment of the present invention, a restraint is provided. The restraint may restrain a lithium metal battery including a plurality of battery cells. The restraint may include a restraint member. The restraint member may have a plate-shaped member made of a rubber-based material and including a plate-shaped base portion and a plurality of protrusion portions on the base portions. The restraint member may have a frame member into which the plate-shaped member is fit. The restraint may include a fixing member which fixes the plurality of protrusion portions of the plate-shaped member which is fitted in the frame member in a state where the plurality of protrusion portions are pressed against the lithium metal battery and pressurized. At least one of the plurality of protrusion portions may have a hole portion on a top surface pressed against the lithium metal battery.

In any of the restraints, at least one of the plurality of protrusion portions may have the hole portion at a center of the top surface. In any of the restraints, the plurality of protrusion portions may have the hole portion on the top surface.

According to an embodiment of the present invention, there is provided a battery system including the restraint and the lithium metal battery. According to an embodiment of the present invention, there is provided an aircraft including the battery system and a propulsion force generation device which utilizes electric energy accumulated in the battery system to generate propulsion force.

The summary clause does not necessarily describe all necessary features of the embodiments of the present invention. The present invention may also be a sub-combination of the features described above.

### BRIEF DESCRIPTION OF DRAWINGS

FIG. 1 is a diagram schematically illustrating an example of a battery system 10.
FIG. 2 is a diagram schematically illustrating an example of the battery system 10.
FIG. 3 is a diagram schematically illustrating an example of a unit 240.
FIG. 4 is a diagram schematically illustrating an example of the frame member 230.
FIG. 5 is a diagram schematically illustrating an example of the protrusion portion 260.
FIG. 6 is a diagram schematically illustrating an example of the unit 240.
FIG. 7 is a diagram schematically illustrating an example of the plurality of units 240.
FIG. 8 is a diagram schematically illustrating an example of the unit 240.
FIG. 9 is a diagram schematically illustrating an example of the plurality of units 240.
FIG. 10 is a diagram schematically illustrating an example of the protrusion portion 260.
FIG. 11 is a diagram schematically illustrating an example of the battery system 10.
FIG. 12 is a diagram schematically illustrating an example of the plate-shaped member 280.
FIG. 13 is a diagram schematically illustrating an example of the protrusion portion 260.
FIG. 14 is a diagram schematically illustrating an example of the protrusion portion 260.
FIG. 15 is a diagram schematically illustrating an example of the HAPS 700 in which the battery system 10 is installed.

### DESCRIPTION OF EMBODIMENTS

Hereinafter, the present invention will be described through embodiments of the invention; however, the following embodiments do not limit the invention according to the claims. Further, not all combinations of features described in the embodiments are necessarily essential to the solution of the invention.

The lithium-ion battery can obtain sufficient battery characteristics by being restrained with no pressure or low pressure of about 0.0 to 0.2 MPa. On the other hand, it has been found that when a lithium metal battery is restrained at a pressure similar to that in the case of a lithium-ion battery, the cycle life deteriorates. By increasing the restraining pressure by a method such as metal plate restraint in which restraining is performed by a metal plate, the cycle life is improved; however, the restraint member becomes heavy, and the gravimetric energy density decreases. Further, the thickness of a lithium metal battery changes due to charging and discharging; however, in metal plate restraint, pressure adjustment is not appropriately performed, and thus there is a possibility that the restraining pressure on the lithium metal battery becomes excessive or insufficient. Further, it is important to suppress the sliding of the lithium metal battery and to restrain the lithium metal battery stably even when the thickness of the lithium metal battery changes. The restraint 200 according to the present embodiment is lighter in weight than a metal plate restraint and the like, and includes a structure in which, when the thickness of a lithium metal battery changes due to charging and discharging, the restraining pressure on the lithium metal battery is appropriately adjusted. Further, the restraint includes a structure capable of appropriately suppressing the sliding of the lithium metal battery 100.

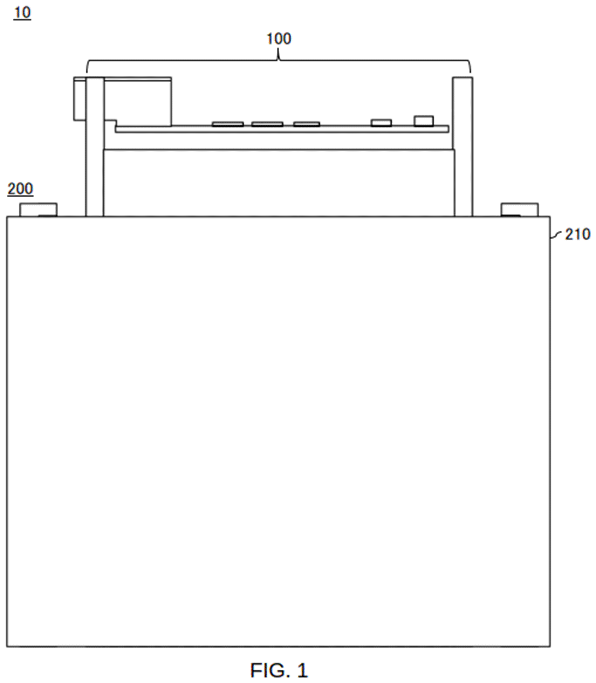

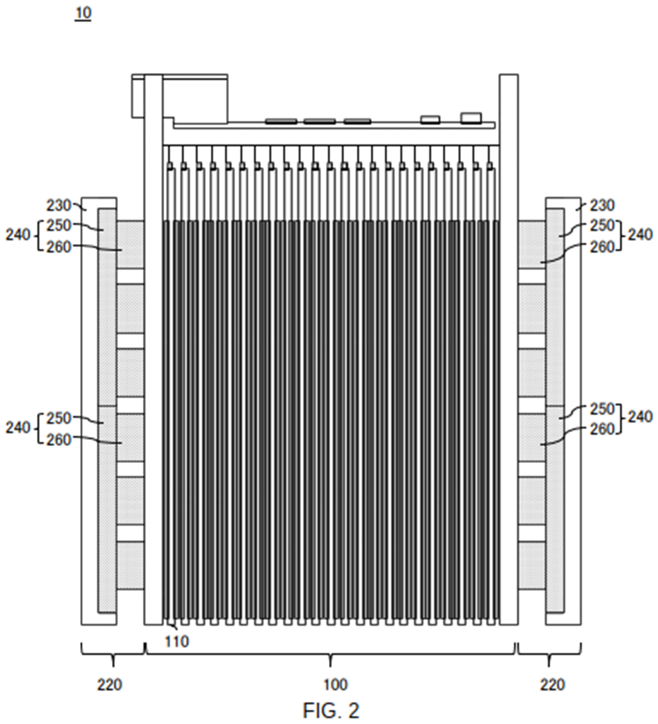

FIGS. 1 and 2 schematically illustrate an example of the battery system 10. The battery system 10 includes the lithium metal battery 100 and the restraint 200. The lithium metal battery 100 includes a plurality of battery cells 110. The plurality of battery cells 110 are arranged side by side.

The restraint 200 restrains the lithium metal battery 100. The restraint 200 may restrain the lithium metal battery 100 along the direction in which the plurality of battery cells 110 are arranged.

In the example illustrated in FIGS. 1 and 2, the restraint 200 includes a fixing member 210 and a restraint member 220. The fixing member 210 fixes the lithium metal battery 100 in a state where the lithium metal battery 100 is sandwiched and pressurized by the restraint member 220.

In the example illustrated in FIGS. 1 and 2, the restraint 200 includes the restraint members 220 on both sides of the lithium metal battery 100 in the left-right direction. Note that the restraint 200 may include the restraint member 220 only on one side without including the restraint members 220 on both sides of the lithium metal battery 100 in the left-right direction. For example, in this case, on the side opposite the side of the lithium metal battery 100 on which the restraint member 220 is located, a member formed of a material having relatively high hardness and relatively light weight, such as carbon fiber reinforced plastics (CFRP), is arranged. Then, the fixing member 210 fixes the restraint member 220 in a state where the restraint member 220 is pressed against the lithium metal battery 100 and pressurized. The fixing member 210 may fix the lithium metal battery 100 in a state where the lithium metal battery 100 is sandwiched and pressurized by the member arranged on a side opposite the side of the lithium metal battery 100 on which the restraint member 220 is located and the restraint member 220.

In the present embodiment, a case where the restraint 200 includes the restraint members 220 on both sides of the lithium metal battery 100 in the left-right direction will be mainly described as an example.

The restraint member 220 includes a plurality of units 240 and a frame member 230. The plurality of units 240 are arranged inside the frame member 230. FIG. 2 illustrates an example in which the restraint member 220 includes two rows of units 240 in the vertical direction, but the number and arrangement of the units 240 are not limited thereto. For example, the restraint member 220 may include three or more rows of the units 240. Similarly, the restraint member 220 may include a plurality of columns of units 240 in the horizontal direction. The restraint member 220 may include the units 240 in one row and a plurality of columns, or may include the units 240 in a plurality of rows and one column. The plurality of units 240 may be arranged side by side so as to be in contact with each other. This fixes the plurality of units 240 within the frame member 230 without displacement, thereby contributing to stably restraining the lithium metal battery 100 in the battery system 10.

The plurality of units 240 may be fixed to the inside of the frame member 230. For example, the plurality of units 240 are adhered and fixed to the inside of the frame member 230 by an adhesive or the like. For example, recesses or the like are provided on a side of the plurality of units 240 that is in contact with the frame member 230, and convex portions or the like having corresponding shapes are provided at corresponding positions on a side of the frame member 230 that is in contact with the plurality of units 240, and the convex portions or the like fit into the recesses or the like, thereby fixing the plurality of units 240. This fixes the plurality of units 240 within the frame member 230 without displacement, thereby contributing to stably restraining the lithium metal battery 100 in the battery system 10.

When the plurality of units 240 are fixed to the inside of the frame member 230, the plurality of units 240 may be arranged on the inside of the frame member 230 with spacing therebetween. In this case, the spacing between the plurality of units 240 may be equal. This makes it possible to reduce the weight of the battery system 10 as a whole and improve gravimetric energy density by arranging the plurality of units 240 with spacing therebetween, while contributing to stably restraining the lithium metal battery 100 in the battery system 10 by fixing the plurality of units 240 within the frame member 230 without displacement. In the embodiments described below, a case where the units 240 are arranged side by side so as to be in contact with each other without spacing therebetween will be mainly described as an example.

The plurality of units 240 may be made of the rubber-based material. Specific examples of the material of the unit 240 include ethylene propylene diene monomer (EPDM), but the material is not limited thereto. Another example includes natural rubber, styrene butadiene rubber, nitrile rubber, butyl rubber, chloroprene rubber, chlorosulfonated polyethylene rubber, acrylic rubber, silicone rubber, fluorocarbon rubber, and the like, but the material may not be limited thereto.

The plurality of units 240 can be manufactured by molding the rubber-based material by various methods. The molding method for the rubber-based material may be appropriately selected depending on the type of material, desired physical properties, required production capacity, and the like, and is not particularly limited. As a specific example, direct compression molding using the mold, pour molding, injection molding, extrusion molding, and the like can be mentioned. As another specific example, molding may be performed by 3D printing of the thermoplastic elastomer or the like without using a mold. The plate-shaped rubber may be cut with a blade, a laser, or the like to obtain a desired shape. The restraint 200 can be manufactured by manufacturing the plurality of units 240 by these molding methods and arranging the plurality of units 240 in the frame member 230.

At least one unit 240 of the plurality of units 240 is arranged in an orientation different from that of another unit 240. Only one unit 240 may be arranged in an orientation different from that of the another unit 240. For example, only one unit 240 of the plurality of units 240 is arranged in a direction different from that of all of the other remaining units 240, and all of the other remaining units 240 in question are each arranged in the same direction as each other. For example, some units 240 of the plurality of units 240 are arranged in a direction different from that of all of the other remaining units 240, and all of the other remaining units 240 in question are each arranged in the same direction as each other. For example, each of the plurality of units 240 is arranged so as to have an orientation different from that of the adjacent unit 240.

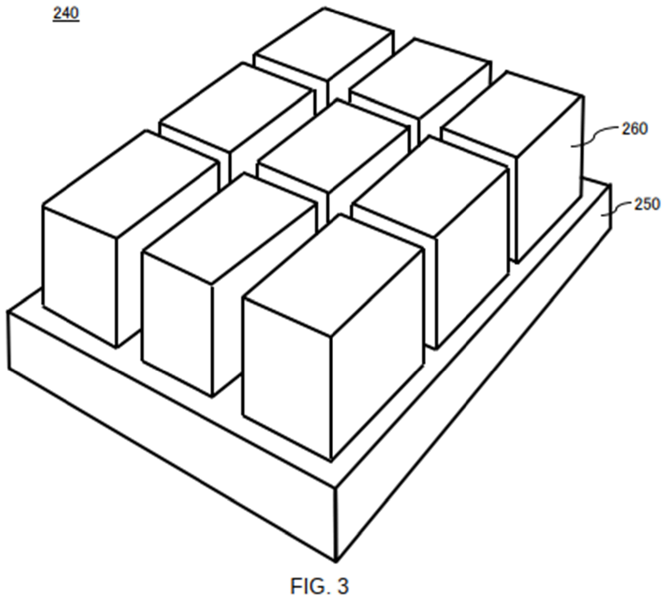

FIG. 3 is a diagram schematically illustrating an example of the unit 240. Each of the plurality of units 240 includes at least one protrusion portion 260. In FIG. 3, an example is illustrated in which the unit 240 includes a total of nine protrusion portions 260 in three rows and three columns, but the arrangement and number of the protrusion portions 260 are not limited thereto. Each of the plurality of units 240 may include one protrusion portion 260. Each of the plurality of units 240 may include two, three, four, five, six, seven, or eight protrusion portions 260. Each of the plurality of units 240 may include ten or more protrusion portions 260. The arrangement of the plurality of units 240 may be any arrangement as long as it can appropriately adjust the restraining pressure on the lithium metal battery 100, and can suppress the sliding of the lithium metal battery 100 within the battery system 10, and stably restrain the lithium metal battery 100. The plurality of units 240 may be arranged in the plurality of rows and/or the plurality of columns. The plurality of units 240 may not be arranged in a plurality of rows, and may be arranged in only one row. The plurality of units 240 may not be arranged in a plurality of columns, and may be arranged in only one column. The plurality of units 240 may be arranged such that the number of columns and the number of rows are equal. The plurality of protrusion portions 260 may have a configuration in which pressure is applied as uniformly as possible to the lithium metal battery 100 and in which buckling is unlikely to occur.

Thus, while reducing weight as compared with metal plate restraint or the like, when the thickness of the lithium metal battery changes due to charging and discharging, the restraining pressure on the lithium metal battery can be appropriately adjusted. In addition, when the unit 240 is manufactured by molding a rubber material by vulcanization or the like, the unit 240 can be manufactured by using a small mold having a relatively simple shape. By arranging and combining the plurality of units 240 manufactured in this manner in different orientations, it becomes possible to manufacture a relatively complex rubber-based cushioning structure without using a large mold having the relatively complex shape.

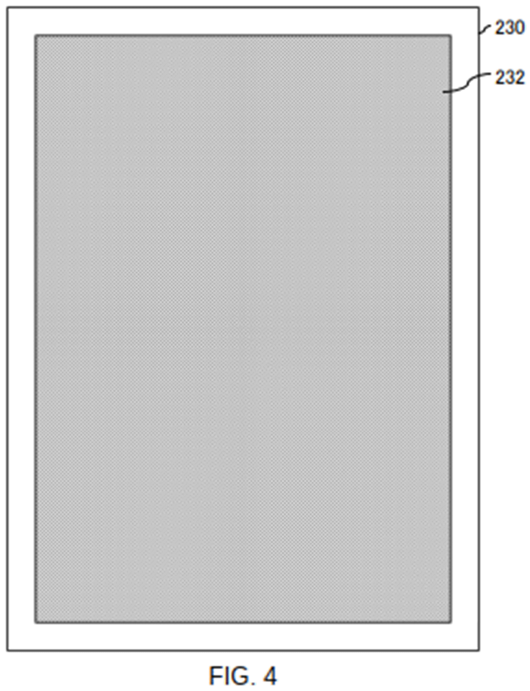

FIG. 4 is a diagram schematically illustrating an example of the frame member 230. The dimensions shown in FIG. 4 are merely an example, and other dimensions may be used. The frame member 230 has a recess 232. The depth of the recess 232 may be the same as the height of the base portion 250. The depth of the recess 232 may be from one-tenth to one-half of the height of the base portion 250. The depth of the recess 232 may be from one-fifth to one-third of the height of the base portion 250.

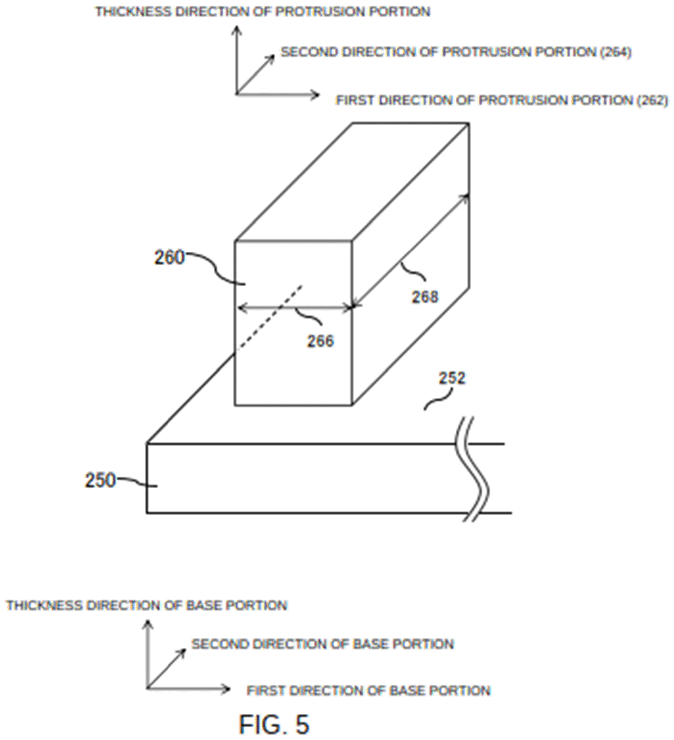

FIG. 5 is a diagram schematically illustrating an example of the protrusion portion 260. Each of the plurality of units 240 may have the planar base portion 250 and at least one protrusion portion 260 protruding from the base portion 250 in a thickness direction of the base portion 250. Each of the plurality of units 240 may have a length 266 of the protrusion portion 260 along a first direction 262 parallel to the plane 252 of the base portion 250 that is different from a length 268 of the protrusion portion 260 along a second direction 264 parallel to the plane 252 and different from the first direction 262. When the protrusion portion 260 is pressed against the lithium metal battery 100, at least one protrusion portion 260 included in at least one of the plurality of units 240 contacts the lithium metal battery 100 in an orientation different from orientations of other protrusion portions 260. This makes the protrusion portions 260 more resistant to deformation in which the protrusion portions 260 fall over, as compared with the case where all of the protrusion portions 260 are arranged in the same direction. Therefore, it is possible to suppress the sliding of the lithium metal battery 100 within the battery system 10, and stably restrain the lithium metal battery 100.

In the example illustrated in FIG. 5, the first direction 262 of the protrusion portion 260 and the second direction 264 of the protrusion portion 260 intersect at right angles, but as long as the first direction 262 of the protrusion portion 260 and the second direction 264 of the protrusion portion 260 are parallel to the plane 252 of the base portion 250, an angle formed by the first direction 262 of the protrusion portion 260 and the second direction 264 of the protrusion portion 260 may be any number of degrees. For example, the angle formed by the first direction 262 of the protrusion portion 260 and the second direction 264 of the protrusion portion 260 may be 30°, 45°, 60°, 120°, 135°, or the like.

In the example illustrated in FIG. 5, the cross-sectional shape of the protrusion portion 260 in a cross section intersecting a thickness direction of the protrusion portion 260 is rectangular, but as long as the length 266 along the first direction 262 and the length 268 along the second direction 264 are different from each other, the cross-sectional shape may be any shape. For example, the cross-sectional shape is triangular. For example, the cross-sectional shape is a polygon having four or more sides.

In the example illustrated in FIG. 5, the first direction of the base portion 250 and the first direction 262 of the protrusion portion 260 are in the same direction, but the present disclosure is not limited thereto. Further, the second direction of the base portion 250 and the second direction 264 of the protrusion portion 260 are in the same direction, but the present disclosure is not limited thereto. That is, angles formed by each of the first direction of the base portion 250, the second direction of the base portion 250, the first direction 262 of the protrusion portion 260, and the second direction 264 base portion of the protrusion portion 260 are not particularly limited as long as the angles do not contradict the above conditions.

By adjusting the shape and arrangement of the protrusion portion 260 as described above, it is possible to adjust the restraining force generated by the unit 240 and the resistance to falling over of the protrusion portion 260. As a result, when the thickness of the lithium metal battery changes due to charging and discharging, it is possible to suppress the sliding of the lithium metal battery 100 within the battery system 10 while appropriately maintaining a restraining pressure on the lithium metal battery.

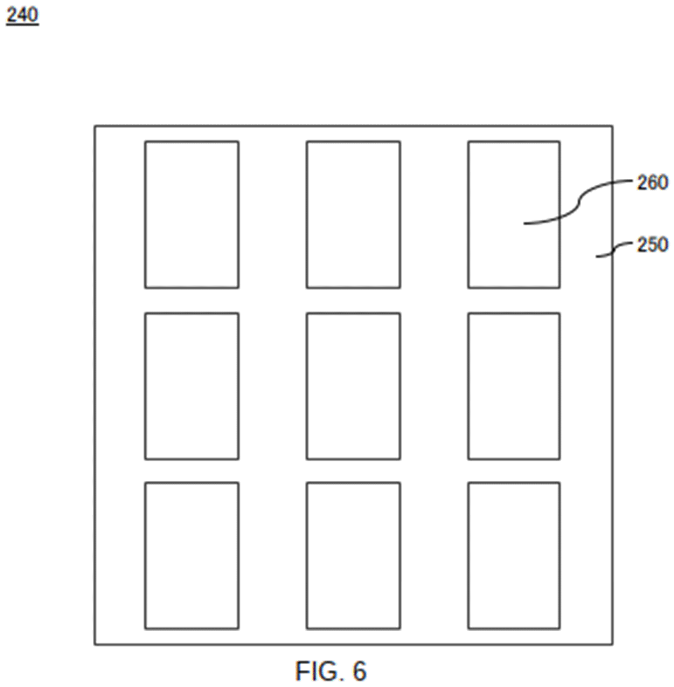

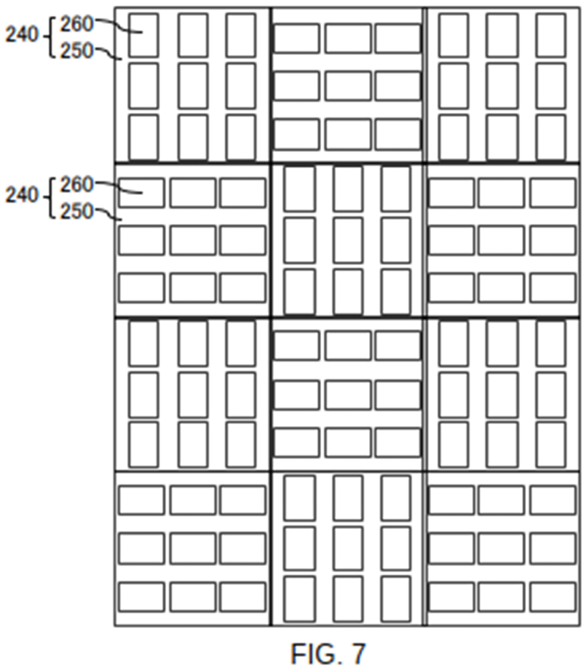

FIGS. 6 and 7 schematically illustrate an example of the unit 240. In the example illustrated in FIGS. 6 and 7, the base portion 250 is square. This makes it possible to facilitate arrangement of the units 240 in a case where the units 240 are arranged in the frame member 230 without spacing therebetween and without gaps. In addition, the packing between adjacent units 240 is improved, the units 240 are more easily fixed within the frame member 230, and positional displacement of the units 240 is suppressed. Consequently, the sliding of the lithium metal battery 100 within the battery system 10 can be suppressed.

In FIGS. 6 and 7, an example is illustrated in which each of the units 240 has nine protrusion portions 260 arranged in three rows and three columns in the same orientation on the square base portion 250; however, the present disclosure is not limited thereto. Each of the plurality of units 240 may have a plurality of protrusion portions 260 arranged in the same orientation in a plurality of rows and a plurality of columns on the square base portion 250. The number n of the plurality of rows and the number m of the plurality of columns may be any integers. m and n may be integers different from each other, that is, the number of the plurality of rows and the number of the plurality of columns may be different. For example, examples include arranging the plurality of protrusion portions 260 in 7 rows × 4 columns, 12 rows × 9 columns, and the like. m and n may be integers having the same value, that is, the number of the plurality of rows and the number of the plurality of columns may be equal. For example, examples include arranging the plurality of protrusion portions 260 in 2 rows × 2 columns, 4 rows × 4 columns, 5 rows × 5 columns, and the like.

In the example illustrated in FIGS. 6 and 7, although the plurality of protrusion portions 260 on one unit 240 are all arranged in the same orientation, the plurality of units 240 are arranged such that at least one unit 240 of the plurality of units 240 is arranged in a different orientation. Therefore, among the plurality of protrusion portions 260 on a surface constituted by the plurality of units 240, the plurality of protrusion portions 260 on at least one unit 240 are arranged in an orientation different from the plurality of protrusion portions 260 on the other remaining units 240. When an external force acts such that the lithium metal battery 100 slides on the protrusion portions 260, if the protrusion portions 260 are all arranged in the same direction, the protrusion portions 260 are less likely to fall over with respect to a specific direction, but are likely to fall over with respect to another direction different from that direction. However, as described above, by arranging the plurality of protrusion portions 260 such that orientations of the plurality of protrusion portions 260 are different, it is possible to make the plurality of protrusion portions 260 as a whole less likely to fall over in various directions. As a result, it is possible to suppress the sliding of the lithium metal battery 100 within the battery system 10 and stably restrain the lithium metal battery 100. In addition, it becomes possible to manufacture the relatively complex cushioning structure using only a small mold having the relatively simple shape, without using the large mold having the relatively complex shape.

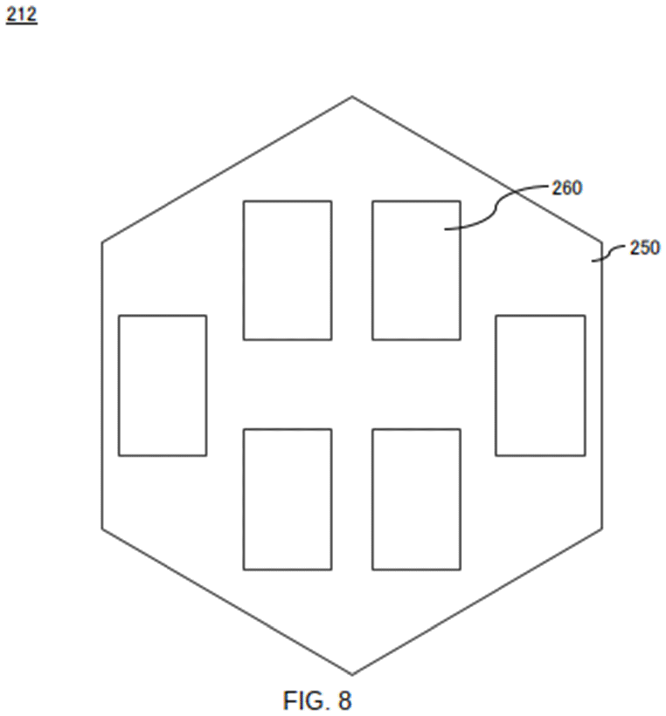

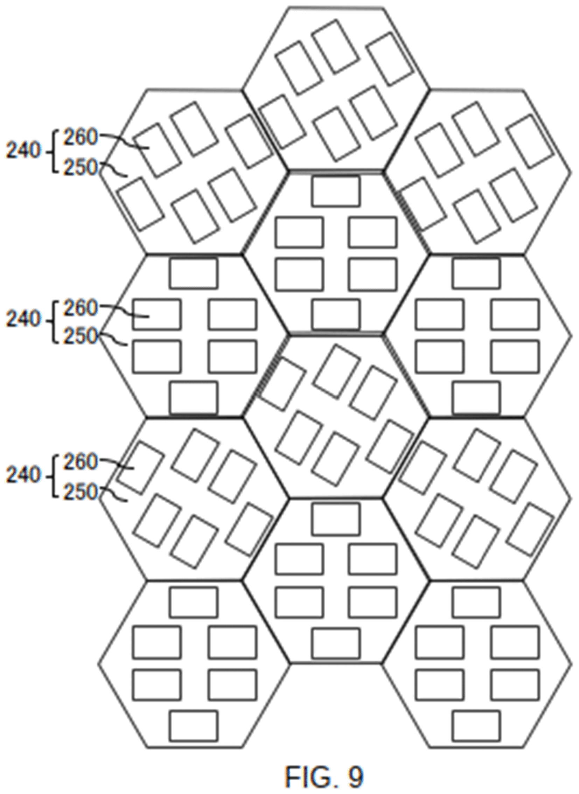

FIGS. 8 and 9 schematically illustrate an example of the unit 240. In the example illustrated in FIGS. 8 and 9, the base portion 250 is the regular hexagon. In FIGS. 8 and 9, an example is illustrated in which each of the units 240 has, on the regular-hexagonal base portion 250, six protrusion portions 260 arranged in the same orientation; however, the number and the orientations of the protrusion portions 260 are not limited thereto. The number of the protrusion portions 260 may be any positive integer, and is, for example, 1, 2, 3, 4, 5, 6, 7, 8, 9, 10, 11, 12, or 13. When the unit 240 has a plurality of protrusion portions 260, the orientations of the plurality of protrusion portions 260 may be different from each other, or the orientations of some of the plurality of protrusion portions 260 may be different. When the unit 240 has a plurality of protrusion portions 260, the orientations of the plurality of protrusion portions 260 may all be the same.

This makes it possible to facilitate arrangement of the units 240 in a case where the units 240 are arranged in the frame member 230 without spacing therebetween and without gaps. Further, as compared with the case where the base portion 250 is a square, combinations of directions of the plurality of protrusion portions 260 increase, and thus the sliding of the lithium metal battery 100 within the battery system can be suppressed with respect to more directions. Further, the packing between adjacent units 240 is further improved, the units 240 are more easily fixed within the frame member 230, and positional displacement of the units 240 is further suppressed. As a result, the sliding of the lithium metal battery 100 within the battery system 10 can be further suppressed.

When the units 240 illustrated in FIGS. 8 and 9 are fixed to the inside of the frame member 230, the fixing method may be adjusted so as to correspond to the regular-hexagonal base portion 250 of the unit 240. As an example, the shape of the recess 232 of the frame member 230 is changed so as to correspond to the regular hexagon that is the shape of the base portion 250 of the unit 240. Specifically, as in the example illustrated in FIG. 9, in a case where the plurality of units 240 are arranged without spacing therebetween and without gaps, the shape of the recess 232 of the frame member 230 is made to correspond to the shape along the outer edge of the polygon formed by the plurality of units 240 assembled together. As another example, the attachment is fixed to an inside of the recess 232 without changing the shape of the recess 232 of the frame member 230. In this case, the outer side wall of the attachment has a shape along a side wall of the recess 232, and the inner side wall of the attachment has a shape along an outer edge of a polygon formed by the plurality of units 240 assembled together.

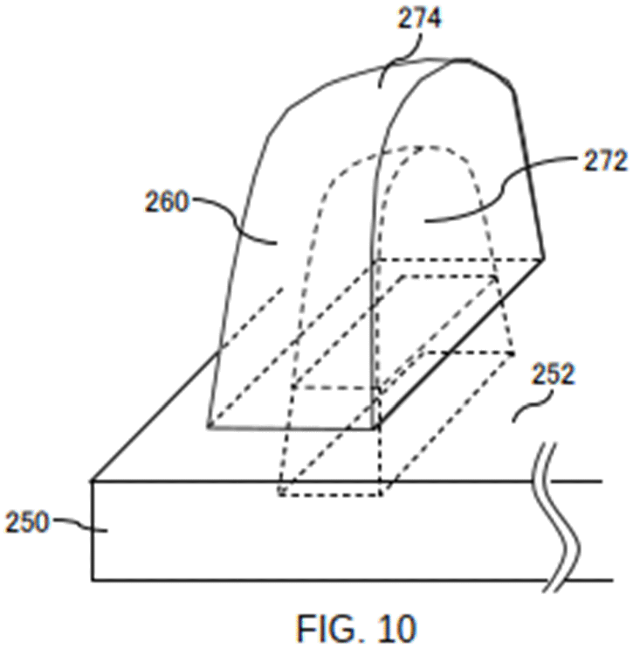

FIG. 10 is a diagram schematically illustrating an example of the protrusion portion 260. In the example illustrated in FIG. 10, the protrusion portion 260 has a hollow portion 272 opening toward a side of the base portion 250, and a top surface 274 on a side opposite the side of the base portion 250 has a curved shape. The hollow portion 272 may have any shape as long as the hollow portion 272 is hollow. For example, the hollow portion 272 has a substantially similar shape to the protrusion portion 260. Thus, the unit 240 can be further reduced in weight while maintaining, to a certain extent, the restraining force generated by the protrusion portion 260 and the resistance to falling over of the protrusion portion 260. In addition, as compared with the case without the hollow portion 272, a creep phenomenon under a constant strain condition can be reduced.

The opening of the hollow portion 272 toward the side of the base portion 250 may penetrate through the base portion 250 and be opened to the plane of the base portion 250 opposite the protrusion portion 260. In a case where the hollow portion 272 penetrates the base portion 250, the cross-sectional area of a cross section of the hollow portion 272 parallel to the plane 252 may increase as the cross section approaches the plane of the base portion 250 opposite the protrusion portion 260. Thus, the unit 240 can be further reduced in weight while maintaining the restraining force generated by the protrusion portion 260 and the resistance to falling over of the protrusion portion 260. In addition, since the core portion of a mold corresponding to the hollow portion 272 is more easily removed, manufacturing efficiency in manufacturing the unit 240 is enhanced, and an increase in the non-defective product rate of the unit 240 can be expected. The opening of the hollow portion 272 toward the side of the base portion 250 may be closed on the plane of the base portion 250 on the protrusion portion 260 side or inside the base portion 250, without penetrating the base portion 250 and without being opened to the plane of the base portion 250 opposite the protrusion portion 260. Thus, in addition to enabling the unit 240 to be further reduced in weight while maintaining the restraining force generated by the protrusion portion 260 and the resistance to falling over of the protrusion portion 260, the contact area between the unit 240 and the frame member 230 can be ensured, so that the unit 240 is less likely to slip within the frame member 230, and positional displacement of the unit 240 is suppressed. Consequently, the sliding of the lithium metal battery 100 within the battery system 10 can be suppressed.

Each of the above embodiments may be implemented in combination as long as there is no contradiction. For example, this is a case where the plurality of protrusion portions 260 of the unit 240 illustrated in FIG. 3 are protrusion portions 260 having the hollow portions 272 illustrated in FIG. 10. For example, this is a case where the plurality of protrusion portions 260 of the unit 240 illustrated in FIGS. 6, 7, 8, and 9 are protrusion portions 260 having the hollow portions 272 illustrated in FIG. 10.

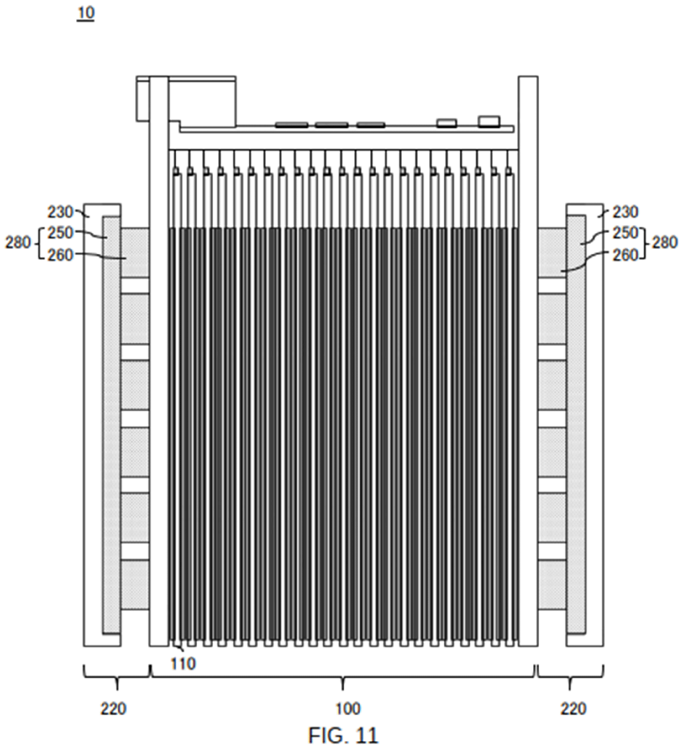

FIG. 11 is a diagram schematically illustrating an example of the battery system 10. In the example illustrated in FIG. 11, the plate-shaped member 280 is arranged inside the frame member 230 instead of the plurality of units 240. The plate-shaped member 280 includes a plurality of plate-shaped base portions 250 and a plurality of protrusion portions 260 on the base portions 250. Except that the plate-shaped member 280 is arranged inside the frame member 230, the structure of the battery system 10 illustrated in FIG. 11 may be common to the battery system 10 illustrated in FIGS. 1 and 2. Description thereof is omitted.

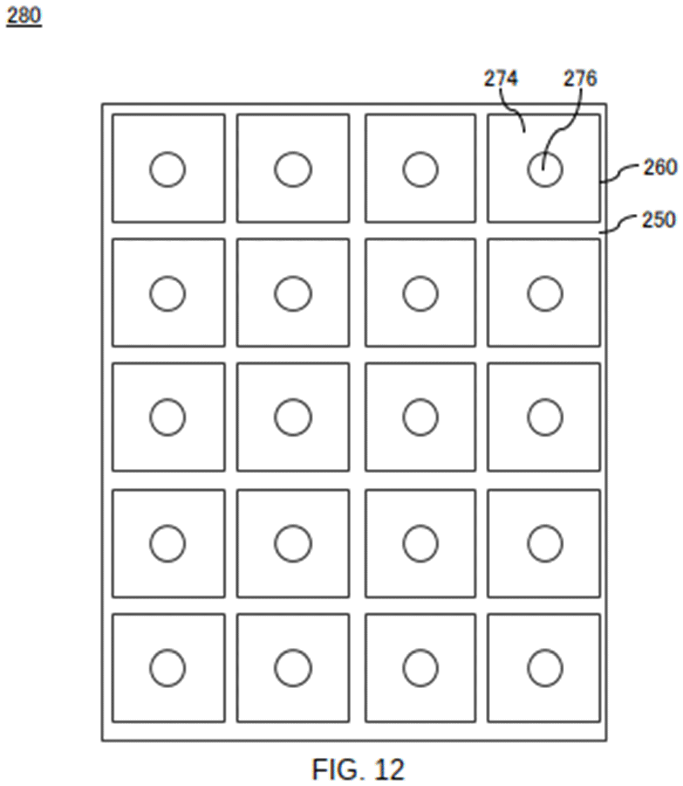

FIG. 12 is a diagram schematically illustrating an example of the plate-shaped member 280. At least one of the plurality of protrusion portions 260 of the plate-shaped member 280 has the hole portion 276 in the top surface 274 pressed against the lithium metal battery 100. In the example illustrated in FIG. 12, an example is illustrated in which the protrusion portions 260 are arranged in 5 rows × 4 columns, but the arrangement of the protrusion portions 260 is not limited thereto, as in the above-described example. In the example illustrated in FIG. 12, for all twenty protrusion portions 260, one hole portion 276 on a circle is arranged at the center of the top surface 274 of each protrusion portion 260, but the number of the protrusion portions 260 having the hole portions 276, the cross-sectional shape of the hole portions 276, and the number and arrangement of the hole portions 276 are not limited thereto. The position of the hole portion 276 within the top surface 274 of the protrusion portion 260 and the number of the hole portions 276 per one protrusion portion 260 are not limited thereto. Among the plurality of protrusion portions 260, all of the protrusion portions 260 may have the hole portions 276, some of the protrusion portions 260 may have the hole portions 276, or only one protrusion portion 260 may have the hole portion 276. The cross-sectional shape of the hole portion 276 need not be circular, and may be any cross-sectional shape such as the triangle, the quadrangle, the polygon, or the ellipse. The number of the hole portions 276 per one protrusion portion 260 may be plural. The number of the hole portions 276 per one protrusion portion 260 may be one. The position of the hole portion 276 within the top surface 274 of the protrusion portion 260 may be any position. When the number of the hole portions 276 per one protrusion portion 260 is one, the position of the hole portion 276 within the top surface 274 of the protrusion portion 260 may be the center of the top surface 274 of the protrusion portion 260. When the number of the hole portions 276 per one protrusion portion 260 is one, the position of the hole portion 276 within the top surface 274 of the protrusion portion 260 may be another position other than the center within the top surface 274 of the protrusion portion 260.

As illustrated in FIG. 12, the hole portion 276 has a hole shape, and does not take a groove-like shape penetrating through any of the side walls of the protrusion portion 260. By providing the hole portion 276 in the protrusion portion 260 instead of the groove, portions around the hole portion 276 can support each other, and thus, as compared with a case where the groove is provided, rigidity of the protrusion portion 260 can be maintained high and the protrusion portion 260 becomes less likely to fall over. The material of the plate-shaped member 280 may be common to the material of the unit 240. Description thereof is omitted.

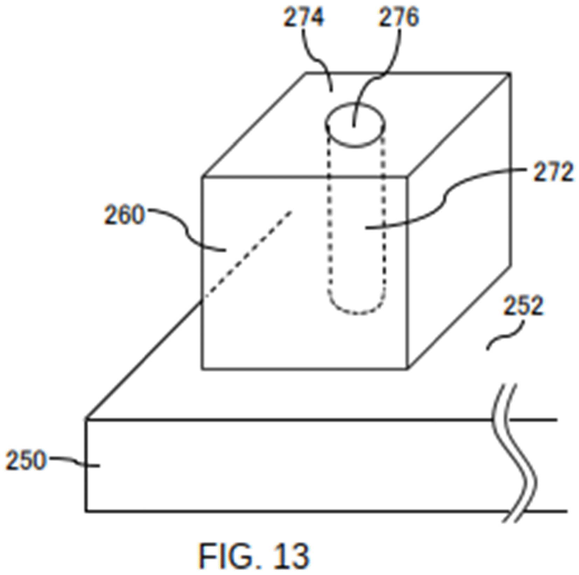

FIG. 13 is a diagram schematically illustrating an example of the protrusion portion 260 of the plate-shaped member 280. The depth of the hole portion 276 is not particularly limited. Specifically, the hole portion 276 may have a depth from the top surface 274 to any depth inside the protrusion portion 260. The hole portion 276 may have a depth from the top surface 274 to the surface of the base portion 250 on the protrusion portion 260 side. The hole portion 276 may have a depth from the top surface 274 to any depth inside the base portion 250. The hole portion 276 may penetrate the base portion 250 and extend from the top surface 274 to the surface of the base portion 250 opposite the protrusion portion 260. Thus, by adjusting the cross-sectional shape, number, arrangement, depth, and the like of the hole portion 276, it is possible to adjust the restraining force generated by the protrusion portion 260 and the tendency to fall over of the protrusion portion 260, and consequently, it is possible to adjust restraining conditions of the lithium metal battery 100 by the restraint 200 to desired conditions.

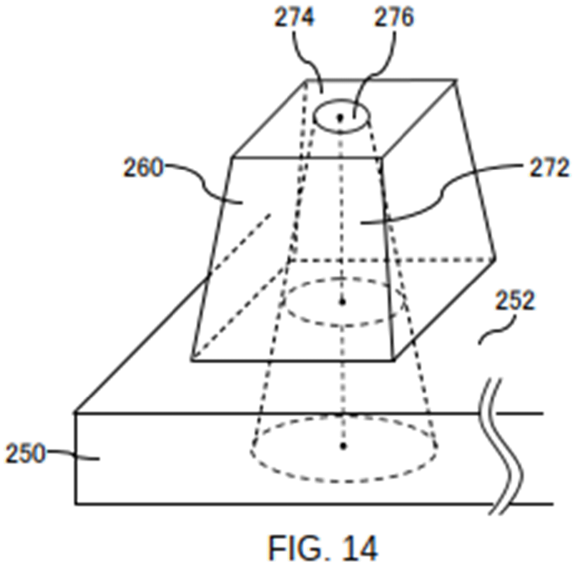

FIG. 14 is a diagram schematically illustrating an example of the protrusion portion 260 of the plate-shaped member 280. In the example illustrated in FIG. 14, the cross-sectional area of the protrusion portion 260 increases from the top surface 274 toward the base portion 250. In other words, two competing side surfaces of the protrusion portion 260 are tapered such that the distance between the two opposing side surfaces increases downward. In the example illustrated in FIG. 14, the protrusion portion 260 is monotonically tapered; however, side surfaces of the protrusion portion 260 may be curved surfaces rather than planar surfaces. The side surfaces of the protrusion portion 260 may be a plurality of planar surfaces angled with respect to each other. In the example illustrated in FIG. 14, the cross-sectional area of the hole portion 276 increases as the hole portion 276 approaches the plane of the base portion 250 opposite the protrusion portion 260 from the top surface 274. Thus, the plate-shaped member 280 can be further reduced in weight while maintaining the restraining force generated by the protrusion portion 260 and the resistance to falling over of the protrusion portion 260. In addition, since the core portion of a mold corresponding to 276 is more easily removed, manufacturing efficiency in manufacturing the unit 240 is enhanced, and an increase in the non-defective product rate of the unit 240 can be expected.

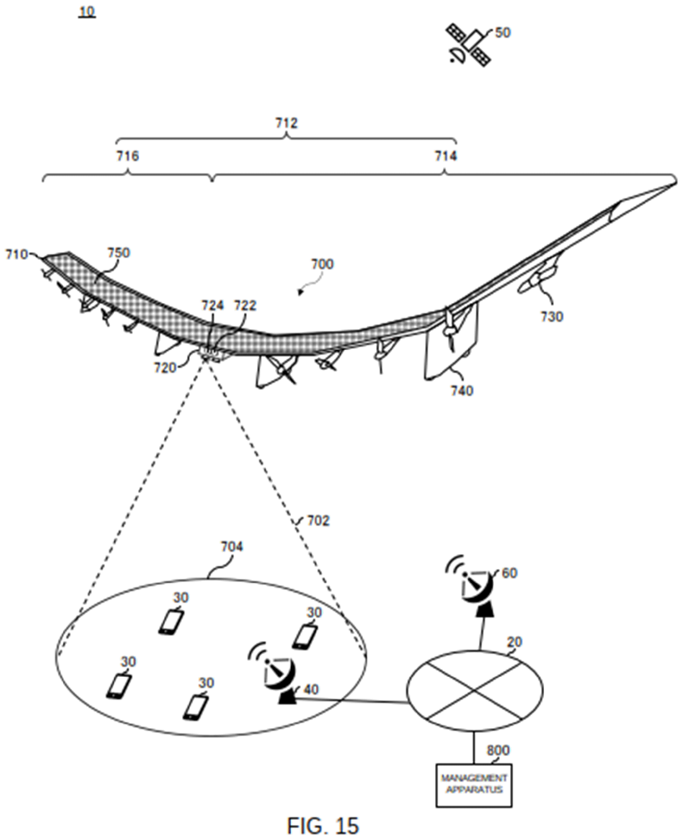

FIG. 15 is a diagram schematically illustrating an example of the HAPS 700 in which the battery system 10 is installed. The HAPS 700 is an aircraft that provides a wireless communication service to a user terminal 30 in a communication area 704 that is formed by emitting a beam 702 toward the ground. The HAPS 700 may be an example of an aircraft which includes the battery system 10 and a propulsion force generation device which generates propulsion force by utilizing electric energy accumulated in the battery system 10.

The HAPS 700 includes an aircraft body 710, a central portion 720, a propeller 730, a pod 740, and a solar panel 750. The aircraft body 710 has a wing portion 712. The wing portion 712 includes a left-wing portion 714 and a right-wing portion 716.

The battery system 10 is arranged, for example, inside the wing portion 712. The electric energy accumulated in the battery system 10 is utilized by each component included in the HAPS 700. For example, the electric energy accumulated in the battery system 10 is utilized by a motor of the propeller 730 which generates the propulsion force. As a specific example, a plurality of battery systems 10, which are connected in parallel, are arranged inside the wing portion 712. Among the plurality of battery systems 10, a plurality of battery systems 10 on a left side may be arranged in the left-wing portion 714, and a plurality of battery systems 10 on a right side may be arranged in the right-wing portion 716. Electric power discharged by the plurality of battery systems 10 is utilized by each component included in the HAPS 700. For example, the electric power discharged by the plurality of battery systems 10 is utilized by the motor of the propeller 730.

A flight control unit 722 and a communication control unit 724 are arranged in the central portion 720. The flight control unit 722 uses the electric power discharged by the plurality of battery systems 10 to control flight of the HAPS 700. The communication control unit 724 uses the electric power discharged by the plurality of battery systems 10 to control communication of the HAPS 700.

The flight control unit 722 controls the flight of the HAPS 700 by controlling the rotation of the propeller 730, for example. Also, the flight control unit 722 may control the flight of the HAPS 700 by changing the angle of a flap or an elevator that is not shown. The flight control unit 722 may include various types of sensors such as a positioning sensor, e.g., a GPS sensor, a gyro sensor, and an acceleration sensor, to manage a position, a movement direction, and a movement speed of the HAPS 700.

The communication control unit 724 forms the communication area 704 on the ground by using an SL (Service Link) antenna. The communication control unit 724 forms a service link with the user terminal 30 on the ground by using the SL antenna. The SL antenna may be a multi-beam antenna. The communication area 704 may be multi-cell.

The communication control unit 724 may form a feeder link with a gateway 40 on the ground by using an FL (Feeder Link) antenna. The communication control unit 724 may access a network 20 via the gateway 40.

The communication control unit 724 may communicate with a communication satellite 50 by using a satellite communication antenna. The communication control unit 724 may access the network 20 via the communication satellite 50 and a satellite communication station 60.

The user terminal 30 may be any communication terminal as long as it can communicate with the HAPS 700. For example, the user terminal 30 is a mobile phone such as a smartphone. The user terminal 30 may be a tablet terminal, a PC (Personal Computer), and the like. The user terminal 30 may also be a so-called IoT, or Internet of Things, device. The user terminal 30 may include anything which corresponds to a so-called IoE, or Internet of Everything.

The HAPS 700 relays a communication between the network 20 and the user terminal 30, for example, via the feeder link or the communication satellite 50, and the service link. The HAPS 700 may provide a wireless communication service to the user terminal 30 by relaying the communication between the user terminal 30 and the network 20.

The network 20 includes a mobile communication network. The mobile communication network may conform to any of a long term evolution (LTE) communication standard, a 5th generation (5G) communication standard, a 3rd generation (3G) communication standard, or a communication standard after a 6th generation (6G) communication standard. The network 20 may include the Internet.

For example, the HAPS 700 transmits data received from the user terminal 30 in the communication area 704 to the network 20. In addition, for example, when the HAPS 700 receives data addressed to the user terminal 30 in the communication area 704, via the network 20, the HAPS 700 transmits the data to the user terminal 30.

The HAPS 700 maintains the communication area 704 in a specific area on the ground while circulating a predetermined flight path in the stratosphere, for example. The HAPS 700 stores the electric power generated by the solar panel 750 during daytime in the plurality of battery systems 10 and uses the electric power of the plurality of battery systems 10 during nighttime, thereby maintaining the flight in the stratosphere. For example, during the daytime, the HAPS 700 charges the plurality of battery systems 10 while ascending to store potential energy, and during the nighttime, it uses the electric power of the battery system 10 as appropriate to operate the propeller 730 and the like while gradually descending, thereby maintaining the flight in the stratosphere.

The management apparatus 800 manages a plurality of the HAPS 700. The management apparatus 800 may communicate with the HAPS 700 via the network 20 and the gateway 40. The management apparatus 800 may communicate with the HAPS 700 via the network 20, the satellite communication station 60, and the communication satellite 50.

The management apparatus 800 controls the HAPS 700 by transmitting a directive. The management apparatus 800 may cause the HAPS 700 to circle over a target area such that the target area on the ground is covered by the communication area 704. For example, the HAPS 700 maintains the feeder link with the gateway 40 by adjusting a pointing direction of the FL antenna while flying in a circular orbit over the target area, and maintains the coverage of the target area by the communication area 704 by adjusting a pointing direction of the SL antenna.

While the present invention has been described by way of the embodiments, the technical scope of the present invention is not limited to the above-described embodiments. It is apparent to persons skilled in the art that various alterations or improvements can be added to the above-described embodiments. It is also apparent from the description of the scope of the claims that the embodiments added with such alterations or improvements can be included in the technical scope of the present invention.

It should be noted that the operations, procedures, steps, stages or the like of each process performed by an apparatus, system, program, and method shown in the scope of the claims, the specification, or diagrams can be performed in any order as long as the order is not indicated by "prior to," "before," or the like and as long as the output from a previous process is not used in a later process. Even if the process flow is described by using phrases such as "first", "then" or the like in the scope of the claims, the specification, or diagrams, it does not necessarily mean that the process must be performed in this order.

### REFERENCE SIGNS LIST

10 battery system, 20 network, 30 user terminal, 40 gateway, 50 communication satellite, 60 satellite communication station, 100 lithium metal battery, 110 battery cell, 200 restraint, 210 fixing member, 220 restraint member, 230 frame member, 232 recess, 240 unit, 250 base portion, 252 plane, 260 protrusion portion, 262 first direction, 264 second direction, 266 length, 268 length, 272 hollow portion, 274 top surface, 276 hole portion, 280 plate-shaped member, 700 HAPS, 702 beam, 704 communication area, 710 aircraft body, 712 wing portion, 714 left-wing portion, 716 right-wing portion, 720 central portion, 722 flight control unit, 724 communication control unit, 730 propeller, 740 pod, 750 solar panel, 800 management apparatus.

## Claims

1. A restraint for restraining a lithium metal battery including a plurality of battery cells, comprising:
a restraint member having:
a frame member; and
a plurality of units made of a rubber-based material and arranged inside the frame member, each of the plurality of units including at least one protrusion portion, and at least one unit of the plurality of units being arranged in an orientation different from that of another unit; and
a fixing member which fixes the plurality of units in a state where the plurality of units are pressed against the lithium metal battery and pressurized.

2. The restraint according to claim 1, wherein each of the plurality of units has a planar base portion and the at least one protrusion portion protruding from the base portion in a thickness direction of the base portion, and
a length of the protrusion portion along a first direction parallel to the plane of the base portion is different from a length of the protrusion portion along a second direction parallel to the plane and different from the first direction.

3. The restraint according to claim 2, wherein the base portion is square.

4. The restraint according to claim 3, wherein each of the plurality of units has a plurality of the protrusion portions arranged in a same orientation in a plurality of rows and a plurality of columns on the square base portion.

5. The restraint according to claim 2, wherein the base portion is a regular hexagon.

6. The restraint according to any of claim 2-5, wherein the protrusion portion has a hollow portion opening toward a side of the base portion, and a top surface on a side opposite the side of the base portion has a curved shape.

7. A restraint for restraining a lithium metal battery including a plurality of battery cells, comprising:
a restraint member having:
a plate-shaped member made of a rubber-based material and including a plate-shaped base portion and a plurality of protrusion portions on the base portions; and
a frame member into which the plate-shaped member is fit; and
a fixing member which fixes the plurality of protrusion portions of the plate-shaped member which is fit into the frame member in a state where the plurality of protrusion portions of the base portions are pressed against the lithium metal battery and pressurized, wherein
at least one of the plurality of protrusion portions has a hole portion on a top surface pressed against the lithium metal battery.

8. The restraint according to claim 7, wherein at least one of the plurality of protrusion portions has the hole portion at a center of the top surface.

9. The restraint according to claim 7 or 8, wherein the plurality of protrusion portions has the hole portion on the top surface.

10. A battery system comprising:
the restraint according to any one of claim 1 to 8, and
the lithium metal battery.

11. An aircraft comprising
the battery system according to claim 10, and
a propulsion force generation device which generates propulsion force by utilizing electric energy accumulated in the battery system.
